# EUROPÄISCHE PATENTSCHRIFT

(11) **EP 0 795 833 B1**
(45) Veröffentlichungstag und Bekanntmachung des Hinweises auf die Patenterteilung: **05.12.2001**
(21) Anmeldenummer: 97250060.7
(22) Anmeldetag: 05.03.1997
(51) Int. Cl.: G06F 17/30, G06F 3/023, G06F 3/033

(54) **Verfahren und System zur menugeführten Navigation in einem komplexen Datenbestand**
Method and apparatus for menu-based navigation in a complex data stock
Procédé et dispositif de navigation à l'aide de menus dans un ensemble complexe de données

(30) Priorität: 11.03.1996 DE 19610637
(43) Veröffentlichungstag der Anmeldung: 17.09.1997
(73) Patentinhaber: Mannesmannröhren-Werke AG, 45473 Mülheim a.d. Ruhr (DE)
(72) Erfinder: Husemann, Holger, Dipl.-Ing., 45473 Mülheim (DE); Reichel, Jens, Dipl.-Ing., 41564 Kaarst (DE)
(74) Vertreter: Meissner, Peter E., Dipl.-Ing.

(56) Entgegenhaltungen:
- EP-A- 0 453 840
- IBM TECHNICAL DISCLOSURE BULLETIN, Bd. 37, Nr. 2B, 1.Februar 1994, Seite 397 XP000433891 "EXTENDED PIE MENU"
- PATENT ABSTRACTS OF JAPAN vol. 015, no. 415 (P-1265), 22.Oktober 1991 & JP 03 167625 A (CASIO COMPUT CO LTD), 19.Juli 1991,
- COMMUNICATIONS OF THE ASSOCIATION FOR COMPUTING MACHINERY, Bd. 36, Nr. 4, 1.April 1993, Seiten 57-71, XP000355422 ROBERTSON G G ET AL: "INFORMATION VISUALIZATION USING 3D INTERACTIVE ANIMATION"
- IBM TECHNICAL DISCLOSURE BULLETIN, Bd. 35, Nr. 3, 1.August 1992, Seiten 438-439, XP000326335 "EXPANDABLE TARGETS FOR EFFICIENT SELECTION VIA A SCREEN CURSOR"
- COMMUNICATIONS OF THE ASSOCIATION FOR COMPUTING MACHINERY, Bd. 36, Nr. 4, 1.April 1993, Seiten 101-109, XP000355425 MARCUS A: "HUMAN COMMUNICATIONS ISSUES IN ADVANCED UIS"

## Beschreibung

Die Erfindung betrifft ein Mittel zur menugeführten Navigation in einem komplexen, auf einem Datenträger abgelegten Datenbestand zum Zwecke der selektiven Visualisierung gemäß dem Gattungsbegriff des Hauptanspruches.

In der sich entwickelnden "Informationsgesellschaft" ist eines der Hauptprobleme: Wie bekomme ich und mit welchem Aufwand die gesuchte Information? Nachdem lange Zeit das Hauptaugenmerk darauf gelegt wurde, möglichst viele Informationen zu sammeln, setzt sich heute mehr und mehr die Erkenntnis durch, daß es wichtiger ist, die richtige Informationsbeschaffungsstrategie zu nutzen. Es kommt also darauf an, die richtige Information aus der Fülle des Angebotes mit einem vertretbaren Aufwand und in möglichst kurzer Zeit herauszufiltem.

Beispielsweise ist es für eine vorbeugende Instandhaltung in einem komplexen Objekt wie einem Hüttenwerk von großer Wichtigkeit, eine genaue Information über den Status eines bestimmten Teiles, z. B. eines Ventils in einer Rohrleitung zu erhalten. Eine Fragestellung könnte sein: Wann ist das betreffende Ventil das letzte Mal ausgewechselt worden? Hatte es in der Zwischenzeit Probleme gegeben, beispielsweise das Ventil klemmte oder Leckagen waren aufgetreten?

Diese Fragen werden aber nicht von einem hochqualifizierten Ingenieurteam gestellt, sondern von dem für diesen Bereich zuständigen Facharbeiter, Vorarbeiter oder Meister. Die gesuchte Information muß also in einer Form geliefert werden, die es einem auch weniger qualifizierten Mitarbeiter gestattet, die Information sich in einfacher Weise zu beschaffen, zu verstehen und daraus die entsprechenden Schlüsse zu ziehen.

Als Navigation im Sinne dieser Erfindung sollen alle die Dialogschritte verstanden werden, mit denen der Benutzer ein entsprechendes Informationsobjekt, das kann die Bildschirmmaske oder eine Seite sein, im System erreicht und mit dem eine beabsichtigte Aufgabenbearbeitung durchgeführt werden kann. Bisher war es üblich mit einer linearen Navigation zu arbeiten. Typisches Beispiel dafür sind die sogenannten pull-down bzw. pull-up Menus, bei denen in einem Informationsstrang eine erstes Menu angezeigt wird und der Benutzer einen ihn interessierenden Eintrag selektiert. Darauf hin wird fensterartig ein weiteres Menu angezeigt, wo der Benutzer wiederum die Möglichkeit hat einen ihn interessierenden Eintrag, Stichwort oder ähnliches auszuwählen. Auf diese Weise kann man durch ein linear baumartig strukturiertes Verzweigungssystem zu der Information gelangen, die man gesucht hat. Beispielsweise umfaßt das von der Fa. Microsoft herausgegebene Betriebssystem mit grafisch orientierter Bedienoberfläche (Windows 95) eine solche lineare Navigation zur Auffindung von Programm- und Datenobjekten. Was aber bei der linearen Navigation nicht möglich ist, ist das Querspringen auf einen parallel laufenden Informationsstrang. Der Benutzer ist gezwungen, den gesamten schon benutzten Verzweigungsweg wieder zurückzulaufen, in der Ausgangsstellung einen anderen Informationsstrang anzuwählen und auf diesem wieder durch eine pull-down bzw. pull-up Aktivität zur gesuchten Information zu gelangen. Diese Verfahrensweise ist als Navigation in einen komplexen Datenbestand unbefriedigend, erstens aus zeitlichen Gründen, zweitens aus Gründen der Verwendung vieler Dialogschritte mit der entsprechenden Fehlerquote und drittens aus Gründen der Unübersichtlichkeit.

Aus der EP 0 547 993 A2 ist ein Verfahren und eine Vorrichtung zur Unterteilung einer Bildschirmanzeige in übersichtliche Bereiche bekannt, so daß mehrere Anzeigen gleichzeitig betrachtet werden können. Vorgeschlagen wird als Mittel ein in zweidimensionaler Ebene perspektivisch dargestellter Würfel, so daß drei Würfelflächen gleichzeitig für den Benutzer sichtbar sind. Die vorderste Würfelfläche ist aktivierbar, so daß auf Ihr Einträge hinzugefügt, geändert oder gelöscht werden können. Weiterhin besteht die Möglichkeit, durch Überfahren der Würfelkante z. B. mit dem Cursor den Würfel zu kippen, so daß zuvor nicht sichtbare Flächen nach vorn in die Aktivposition geschwenkt werden können. Nachteilig bei diesem Modell ist die Begrenzung auf maximal 6 Flächen und die Einschränkung der Aktivierung nur auf eine Fläche.

Aufgabe der Erfindung ist es, ein Mittel zur menugeführten Navigation in einem komplexen auf einem Datenträger abgelegten Datenbestand anzugeben, mit dem in benutzerfreundlicher Weise mit möglichst wenigen und übersichtlichen Aktionen jedes beliebigen Benutzers das gesuchte Informationsziel in lesbarer und verständlicher Form gefunden werden kann und das in einfacher Weise ein Querspringen auf verschiedene parallel laufende Informationsträger erlaubt.

Diese Aufgabe wird mit den im kennzeichnenden Teil angegebenen Merkmalen gelöst. Vorteilhafte Weiterbildungen sind Bestandteil von Unteransprüchen.

Kern der Erfindung ist, daß als Mittel zur menugeführten Navigation in einem komplexen auf einen Datenträger abgelegten Datenbestand ein zwei Menustrukturen (Sicht, Dokumentenklassen) umfassender, zweidimensional perspektivisch dargestellter dreidimensionaler Körper verwendet wird, der in einen visualisierten Informationsträger, im Regelfall ein Bildschirm, einblendbar ist. Die Menustrukturen weisen einen unterschiedlichen Rang auf, wobei eine (Sicht) der anderen (Dokumentenklasse) übergeordnet ist. Ein erster und ein zweiter Flächenbereich, die den Menustrukturen zugeordnet sind, ist in das Blickfeld des Benutzers einschwenkbar. In einer ersten Ausführungsform bietet sich als Körper ein gerades, insbesondere ein reguläres Prisma mit einer drei- oder viereckigen Grundfläche an. Dabei ist das Prisma so im visualisierten Informationsträger perspektivisch dargestellt, daß immer eine Grundfläche, vorzugsweise die Deckfläche und mindestens eine Mantel-Seitenfläche sichtbar ist. Der Vorteil der Darstellung der Deckfläche ist, daß auf ihm in leicht erfaßbarer Form Symbole für die übergeordnete Menustruktur darstellbar sind. Ein reguläres Prisma mit einer drei- oder viereckigen Grundfläche hat aber den Nachteil, daß entweder nur eine Seitenfläche, oder bei Drehung auf die Seitenkante Teilbereiche der zwei aneinanderstoßenden Seitenflächen sichtbar sind. Vorteilhafter ist es eine mindestens fünfeckige Deckfläche zu wählen, so daß eine Seitenfläche voll und die zwei jeweils rechts und links davon anschließenden benachbarten Seitenflächen zumindestens teilweise sichtbar sind. Elegant kann man dieses Problem auch dadurch lösen, daß man einen geraden Zylinder insbesondere einen Kreiszylinder wählt und diesen in vorzugsweise fünf Segmente unterteilt, so daß der beim Fünfeck bereits beschriebene Vorteil auch hier zum Tragen kommt. Grundsätzlich ist eine weitere Unterteilung in sechs, sieben oder mehr Segmente möglich, hat aber den Nachteil, daß bei konstantem Durchmesser des Kreiszylinders die segmentierten Mantelflächen immer kleiner werden. Nun könnte man dem abhelfen, in dem man die im Blickfeld liegende Mantelfläche spreizt, so daß sie entsprechend lesbar wird. Das hat aber den Nachteil, daß die beiden angrenzenden Seitenflächen ganz schmal werden und es schwierig wird, die darauf angebrachten Symbole oder Texte zu erkennen. Auch vom Kurzzeitgedächtnis des Menschen her ist eine Fünfer-Unterteilung vorteilhaft, da mit jeder größeren Unterteilung die Fehlerrate ansteigt, dies gilt insbesondere für Unterteilungen ab sieben und mehr.

Die gleichen Überlegungen gelten auch für die Unterteilung der einzelnen segmentierten Mantelflächen in der untergeordneten Menustruktur (Dokumentenklasse). Diese Unterteilung, die man bildlich gesprochen auch als zu öffnende und zu schließende Schublade bezeichnen kann, sollte ebenfalls bei fünf begrenzt werden. Bei der vorzugsweisen Unterteilung der beiden auf dem Körper festgelegten Menustrukturen in fünf Segmente (Sicht) und fünf Schubladen (Dokumentenklasse) ergibt dies eine Menge von 25 verschieden ansteuerbaren Dokumentenklassen, wobei hinter jeder Dokumentenklasse noch eine entsprechende Anzahl von Seiten hinterlegt ist.
Jede angesteuerte Teilfläche auf dem Körper, d. h. die n-te Schublade im n-ten Segment ist als Schaltfläche ausgebildet, die durch Tastenbefehl oder durch Klicken einer Maus aktiviert werden kann. Der hinter dieser Teilfläche abgespeicherte Datenbestand wird visualisiert und kann mit entsprechenden Grafiken zusammengeführt werden. Der Vorteil des vorgeschlagenen Navigationsmittels ist darin zu sehen, daß durch Drehen des Kreiszylinders unmittelbar ein Wechsel in einen in einer anderen Schublade abgelegten Datenbestand möglich ist. Mit der bisher bekannten linearen Navigation war das nicht möglich.

Diese zuvor beschriebene Navigation innerhalb des Zylindermodells kann man auch als innere Navigation bezeichnen. Bei dieser Navigation betrachtet der Benutzer Informationen, die zu bestimmten Informationsobjekten gehören. Der Benutzer bewegt sich über Querverweise durch Informationseinheiten, die miteinander verbunden sind. Diese Art der Navigation ist dadurch gekennzeichnet, daß sie einen Wechsel des Kontextes mit sich bringt. Der Wechsel einer Dokumentenklasse bringt Informationen zu dem betrachteten Objekt in einem anderen Kontext. Ein technisches Dokument kann durch "Drehen" des Zylinders und Auswahl einer Dokumentenklasse, was man als "Öffnen einer Schublade" bezeichnen kann, angewählt werden. Das in der Schublade befindliche Dokument wird geladen und visualisiert. Der Benutzer kann, wenn es mehrere Seiten umfaßt, darin blättern und zu verbundenen Dokumenten verzweigen. Der gesamte Informationsbestand für das betrachtete Objekt ist über diesen Zylinder abrufbar.
Neben der inneren Navigation ist mit dem Zylindermodell aber auch noch eine äußere Navigation möglich. Dabei findet eine Bewegung für ein ausgewähltes Segment (Sicht) innerhalb der Hierarchie statt. Die verschiedenen festgelegten Hierarchieebenen spiegeln dabei die Struktur der betrachteten Anlage wieder. Bei dieser Bewegung findet jeweils ein Wechsel des Zylinders statt, da zum gleichen Segment (Sicht) in jeder Hierarchieebene andere Zylinder gehören, genauer gesagt, ein übergeordneter und beliebig viele untergeordnete. Das Ergebnis eines Navigationsschrittes ist der Aufruf eines neuen Zylinders und die Bereitstellung der entsprechenden Informationseinheiten für das neu zu betrachtende Objekt. Wesentlich dabei ist, daß für jedes Segment (Sicht) eine entsprechende Hierarchie zugrunde gelegt ist. Diese Form der Navigation zeichnet sich dadurch aus, daß sie den Grad der Detaillierung der technischen Anlagenstruktur in der Darstellung auf dem Informationsträger (Bildschirm) ändert.

In mehreren Prinzipskizzen wird beispielhaft für die Instandhaltung eines Hüttenwerkes das erfindungsgemäße Mittel zur menugeführten Navigation in einem komplexen, auf einem Datenträger abgelegten, Datenbestand näher erläutert.

Es zeigen:
- Figur 1: grob vereinfacht das Gesamtsystem
- Figur 2: das erfindungsgemäße Navigationsmittel
- Figur 3: Navigationszylinder mit Symbolen und zusätzlichen Schaltern
- Figur 4: Zuordnung der Sichten zu den Hierarchien
- Figur 5: Beispiel der Hierarchie "Konstruktiver Aufbau"
- Figur 6: Abbildung einer Sicht mittels des Navigationsmittels in verschiedenen Hierarchieebenen

In diesem hier erläuterten Ausführungsbeispiel besteht das Gesamtsystem aus drei Komponenten. Kernstück des Gesamtsystems ist die Datenbank 1, in der die Vielzahl der erfaßbaren und gesuchten Informationen abgespeichert sind. Auf die Einzelheiten der Struktur der Datenbank wird hier nicht näher eingegangen, da dies nicht der Gegenstand der Erfindung ist. Wesentlich ist nur, daß in der Datenbank beispielsweise in Form von Tabellen alle zum betrachteten Komplex Hüttenwerk zugehörigen Informationsobjekte beispielsweise Verstellkokille und deren Zugehörigkeit zu einer Struktur verwaltet werden. Den Informationsobjekten können weitere Informationsseiten zugeordnet werden. Die Sammlung all dieser Informationsseiten wird als Informationsseiten-Datei 2 bezeichnet. Der Zugriff auf die jeweilige Informationsseite erfolgt über den Seitennamen. Bei einer sehr großen Informationsbasis, d. h. mit vielen Informationsobjekten und einer großen Anzahl von Informationsseiten können diese auf mehrere Informationsseiten-Dateien aufgeteilt werden. Der zentrale Zugriff zu einer oder mehreren Informationsseiten-Dateien wird über die Datenbank 1 gesteuert. Die dritte Komponente des Gesamtsystems ist ein visualisierter Informationsträger, hier beispielsweise in Form eines Bildschirmes 3, über den die Benutzung erfolgt. In der vorliegenden Ausführung ist der Bildschirm in drei Bereiche aufgeteilt:
- eine Statuszeile 4 am oberen Bildschirmrand
- ein Anzeigenbereich 5 in der Mitte des Bildschirmes
- einen Steuerbereich 6 in der unteren Zeile des Bildschirmes, wobei dieser Bereich 6 in mehrere Schaltflächen 7 unterteilt ist.

Der Vollständigkeit halber sei noch erwähnt, daß die schon erwähnte Statuszeile in mehrere Statusfelder (hier nicht dargestellt) unterteilt sein kann. Beispielsweise kann der Benutzer über den Inhalt der Statusfelder Informationen über sein augenblicklich betrachtetes Informationsobjekt, den zugehörigen Seitennamen der Informationseinheit und seine augenblickliche Position erhalten. Dazu ist ganz rechts in der Statuszeile 4 eine Positionsanzeige 8 vorgesehen.
Die Verknüpfung der drei Komponenten 1,2,3 des Gesamtsystems ist durch Doppelpfeile 9,10,11 symbolhaft gekennzeichnet.

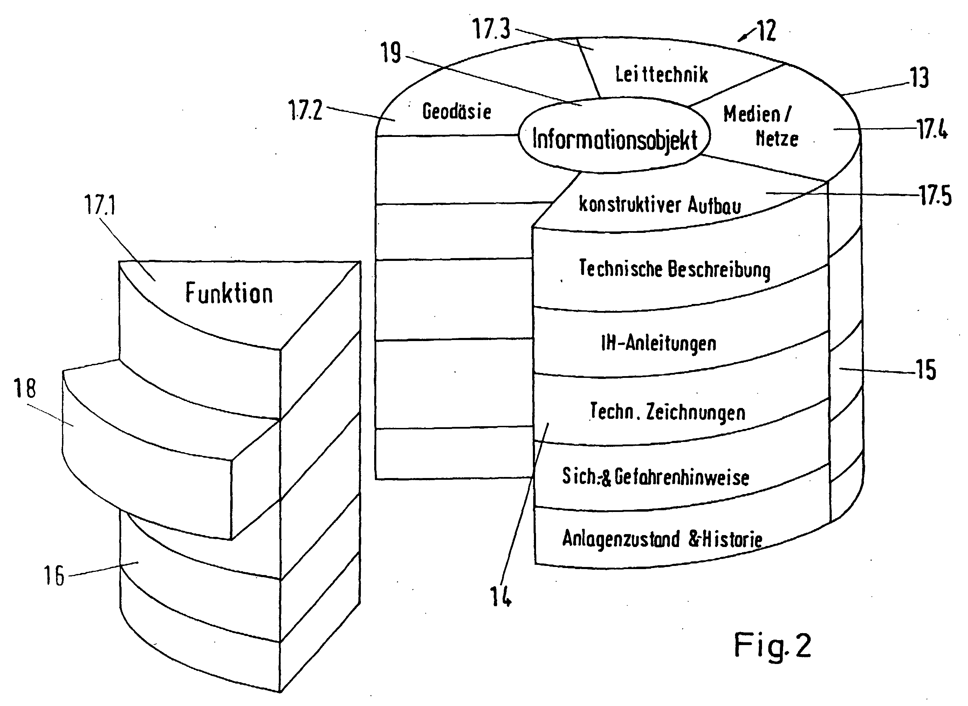

Figur 2 zeigt das erfindungsgemäße Navigationsmittel, hier in Form eines Kreiszylinders. Im nachfolgenden Text wird dieses Mittel als Navigationszylinder 12 bezeichnet.
Der dreidimensionale Navigationszylinder 12 ist in dieser Figur 2 und in der gleichen Art und Weise auch auf dem Bildschirm 3 als zweidimensionales perspektivisches Element dargestellt. Der Benutzer schaut auf die Deckfläche 13 und auf eine segmentierte Mantelfläche 14 und zusätzlich noch auf Teilbereiche der beiden benachbarten segmentierten Mantelflächen 15, 16. In diesem Ausführungsbeispiel ist der Navigationszylinder in fünf Segmente 17.1 - 17.5 unterteilt, wobei jedes Segment einer Benutzersicht entspricht. Unter Sicht soll eine logische Zusammenfassung von Daten und Operationen verstanden werden, die gemeinsam für den Benutzer sichtbar gemacht werden bzw. wieder verschwinden. Eine solche Sicht baut auf eine hierarchische Baumstruktur auf. Diese Baumstruktur wird im folgenden als Informationsstruktur bezeichnet, die in diesem Beispiel vorzugsweise auf fünf Segmente begrenzt worden ist. Für die Instandhaltung eines Hüttenwerkes sind beispielhaft die fünf folgenden Informationsstrukturen gewählt worden:
- Konstruktiver Aufbau. Er gibt den physikalischen Aufbau eines Objektes wieder
- Geodäsie. Diese Informationsstruktur gibt die örtliche Lage innerhalb des Hüttenwerkes für ein betrachtetes Objekt an.
- Leittechnik. Die Leittechnik gibt die Einbindung des betrachteten Objektes in die Steuerung und Ablaufplanung des Hüttenwerkes wieder.
- Funktions-/Verfahrensstruktur. Die Funktions-Nerfahrensstruktur gibt die Eingliederung des betrachteten Objektes in einen funktionalen oder verfahrenstechnischen Zusammenhang wieder.
- Medien-/Energieflüsse. Der Medien-/Energiefluß gibt die Ver- und Entsorgung des betrachteten Objektes mit Stoff, Energie und Information wieder.

Zu jedem Element jeder Informationsstruktur werden die dazugehörigen Informationen in Dokumenten zusammengefaßt. Diese Dokumente sind in diesem Ausführungsbeispiel in fünf Dokumentenklassen 18 gegliedert, aus denen der Benutzer auswählen kann. Für die in dieser Figur 2 sichtbare Informationsstruktur - konstruktiver Aufbau - tragen die fünf Dokumentenklassen 18, die der Anschaulichkeit halber auch als Schublade bezeichnet werden, die nachfolgend genannten Bezeichnungen:
- Technische Beschreibung
- Instandhaltung (IH)-Anleitungen
- Technische Zeichnungen
- Sicherheits- & Gefahrenhinweise
- Anlagenzustand & Historie

In der Reihenfolge der fünf Dokumentenklassen 18 liegt eine gewisse Gewichtung, von der Navigation her ist diese Reihenfolge ohne Bedeutung.

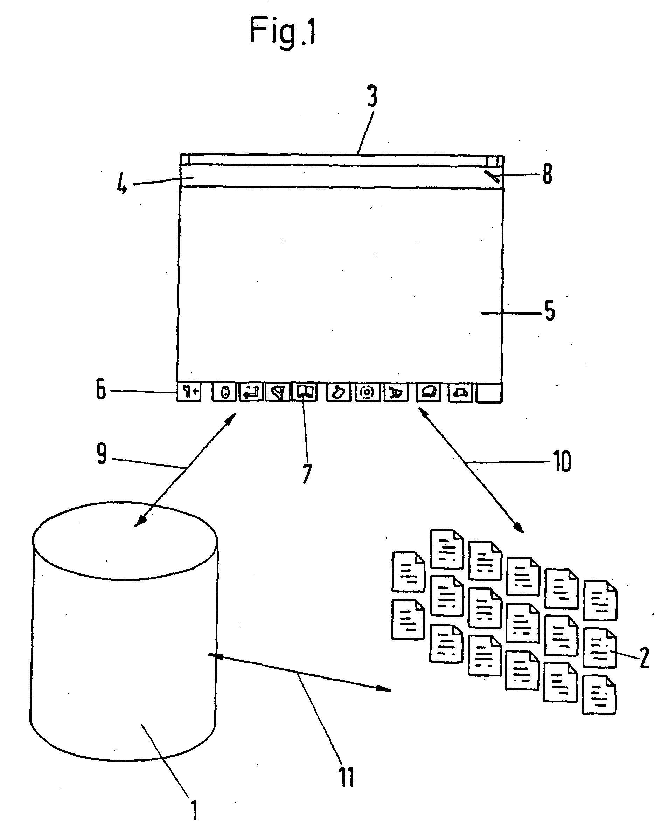

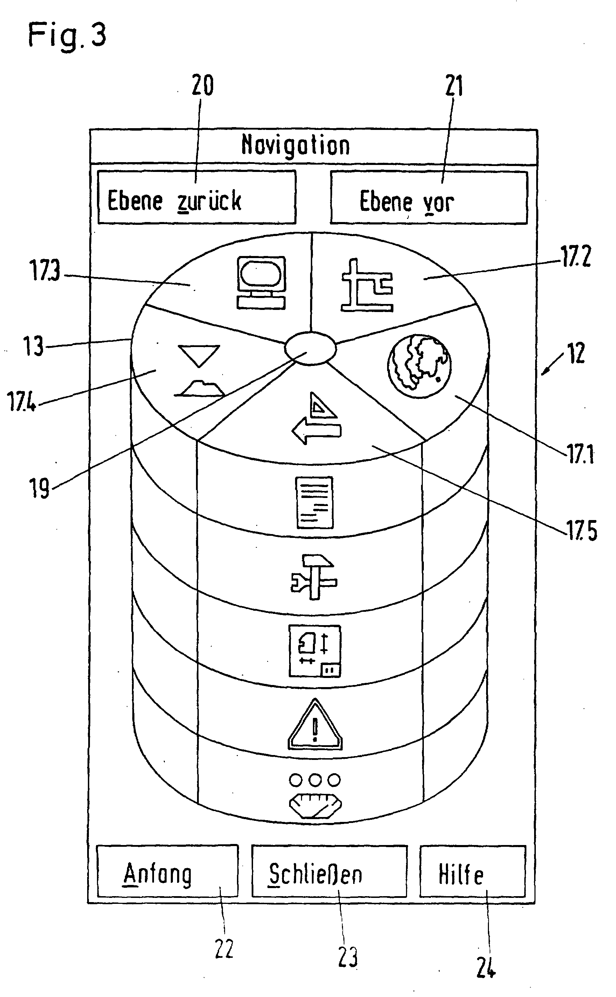

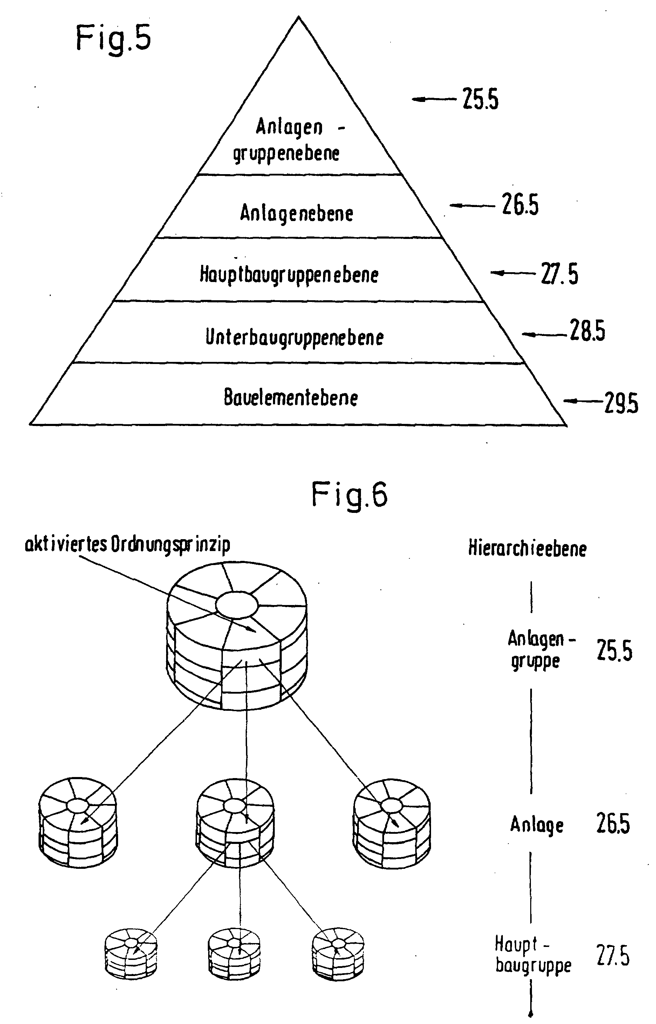

Auf der Deckfläche des Navigationszylinders 12 ist in der Mitte das jeweils betrachtete Informationsobjekt 19 eingetragen. Innerhalb der fünf Informationsstrukturen, die auch als Sicht bezeichnet werden, ist jedes Informationsobjekt 19 eindeutig einer der fünf hierarchischen Ebenen zugeordnet. Die hierarchische Gliederung für das zuvor erläuterte Beispiel - konstruktiver Aufbau - zeigt Figur 5. Durch maximal fünf Navigationsschritte in einer Informationsstruktur kann jedes Informationsobjekt 19 erreicht werden. Damit ist der Navigationszylinder im Informationsnetz eindeutig zugeordnet. Es hat sich als vorteilhaft herausgestellt, die in dieser Darstellung verwendeten Texte für die einzelnen Segmente 17.1 - 17.5 und die Dokumentenklassen 18 durch leicht erfaßbare und unverwechselbar einprägende Symbole zu ersetzen (siehe Fig. 3). Entsprechend der Darstellung in Fig. 3 wird zum einen strukturell und zum anderen assoziativ navigiert. Bei der Einblendung des Navigationszylinders 12 werden insgesamt fünfzehn Schalter angeboten. Es sind dies zwei Schalter 20,21 für die strukturelle Navigation (Ebenenwechsel in der Hierarchie), zehn Schalter für die assoziative Navigation (Wechsel der Sicht, Auswahl der Dokumente) und drei Schalter 22 - 24 mit Basisfunktionen wie Anfang, Schließen, Hilfe.
Die strukturelle Navigation kann auf zwei Arten stattfinden:
- der Benutzer wechselt über die Schalter "Ebene vor" 21 oder "Ebene zurück" 20 in eine andere Hierarchieebene, über oder unterhalb des aktuellen Objektes.
- der Benutzer klickt auf das sensitive Objekt innerhalb des Anzeigenbereiches 5 (Fig. 1) und verzweigt dann zu dem angeklickten Element.

Das Anklicken des Schalters "Ebene vor" 21 bzw. das Anklicken auf das sensitive Objekt entspricht einem Wechsel in der Hierarchieebene nach vom zu weiterer Detaillierung hin. Bei der strukturellen Navigation kann sich der Benutzer nur schrittweise, Ebene für Ebene vor oder zurück bewegen. Zusätzlich hat der Benutzer die Möglichkeit alle sensitiven Objekte in Form einer Liste angezeigt zu bekommen. Diese Dialogbox bietet alle Teilelemente des aktuellen Info-Objektes, die im gleichen Segment (Sicht), aber eine Hierarchieebene tiefer liegen, zur Auswahl an. Doppelklickt der Benutzer auf eine Zeile der Liste, dann wechselt die Anzeige und der Navigationszylinder 12 wird aktualisiert. Gleichzeitig werden die Anzeigenelemente in der Statuszeile 4 (Fig. 1) aktualisiert. Der Benutzer erhält darüber Rückmeldung, daß er die Hierarchieebene gewechselt hat und nun ein anderes Info-Objekt betrachtet.

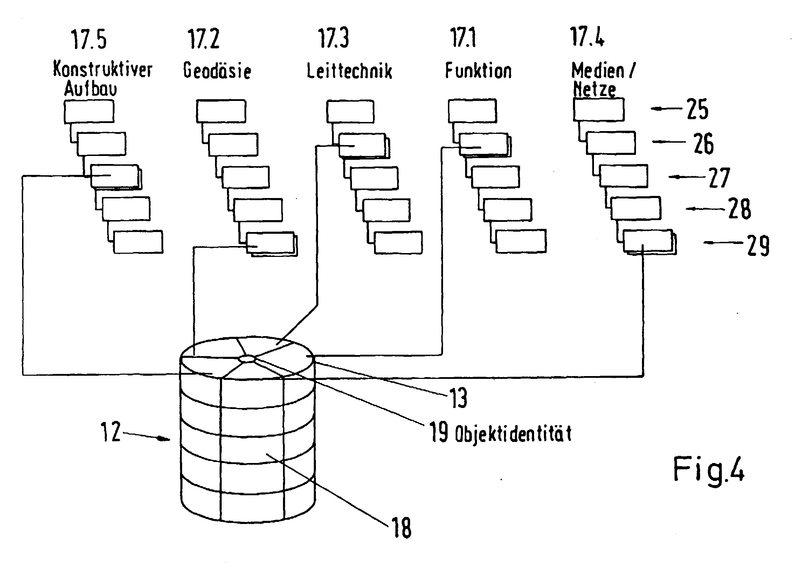

Bei der assoziativen Navigation wird der auf dem Bildschirm 3 eingeblendete Navigationszylinder 12 eingesetzt. Die Schalter für die assoziative Navigation sind in der grafischen Repräsentation des Navigationszylinders 12 untergebracht. Der Wechsel in einen anderen Bereich erfolgt über die auf der Deckfläche 13 angeordneten fünf Schalter 17.1 - 17.5. Das rechte Anzeigenfeld 8 der Kopfzeile 4 des Bildschirms 3 (Fig. 1) zeigt ebenfalls das gewählte Segment (Sicht) an. Das jeweils ausgewählte Segment ist nochmals in fünf Dokumentenklassen 18, wie zuvor schon erläutert, unterteilt. Für das jeweils betrachtete Info-Objekt 19 werden diese Schubladen 18 (Fig. 2) mit den Verweisen auf vorhandene Informationsseiten in der Informationsseiten-Datei 2 gefüllt. Mit dieser Art der Navigation wird dem Benutzer verdeutlicht, daß er, solange er sich im Navigationszylinder 12 bewegt, Informationen über ein einziges Info-Objekt 19 erhält und sich nicht in der Struktur bewegt. Diese Art der Navigation wird auch als innere Navigation bezeichnet, während die anfangs erläuterte strukturelle Navigation als äußere Navigation bezeichnet wird. Die letztgenannte strukturelle oder auch äußere Navigation wird durch die Darstellungen in den Figuren 4 - 6 näher erläutert. In Fig. 2 ist bereits an einem Beispiel deutlich gemacht worden, daß erfindungsgemäß die Informationsstrukturen 17.1 - 17.5, auch als Sichten bezeichnet, auf der Deckfläche 13 des Zylindermodells angeordnet werden. Wie in Fig. 4 dargestellt ist, kann Objektzuordnung in den einzelnen Sichten 17.1 - 17.5 aber aus unterschiedlichen Hierarchieebenen stammen. Dabei ist jede Sicht 17.1 - 17.5 einer in fünf Ebenen 25 - 29 unterteilten Hierarchie zugeordnet. Beispielsweise ist für die Sicht - konstruktiver Aufbau 17.5 - die dritte Hierarchieebene 27 (schraffiertes Feld) angesteuert. Die Hierarchieebenen 25 - 29 sind dabei für jede Sicht 17.1 - 17.5 verschieden und unabhängig voneinander. In Fig. 5 sind für das Beispiel - konstruktiver Aufbau 17.5 - die Hierarchieebenen 25.5 - 29.5 im einzelnen bezeichnet. Allein schon an den gewählten Wortbegriffen kann man erkennen, daß jeder Navigationsschritt weiter nach unten eine Detaillierung bedeutet, wobei das einzelne Bauelement 29.5 dann die kleinste betrachtete Einheit ist. Man bezeichnet dieses Navigationsverfahren innerhalb einer Sicht auch als Zooming, herrührend von der Fotografie, wo man mit der Gesamtübersicht beispielsweise eines Schlosses beginnend durch sogenanntes Zoomen immer eingeengter das ursprüngliche Objekt (Schloß) betrachtet, bis man beispielsweise beim Detail der Struktur einer Fensterrosette stehenbleibt.

In Fig. 6 ist dieses Prinzip für die ersten drei Hierarchieebenen 25.5 - 27.5 noch einmal verdeutlicht. Ein Bewegen innerhalb der Hierarchie für eine ausgewählte Sicht bedeutet ein Wechsel des Zylinders, wobei jeder Zylinder eine eindeutige Objektidentität 19 (Fig. 2) hat.

Das zuvor beschriebene Navigationssystem kann durch weitere Hilfsangebote ergänzt werden. Beispielsweise sind im Steuerbereich 6 des Bildschirmes 3 weitere Schalter für den Seiten-Katalog, den Objekt-Katalog, die Historie, das Setzen von Lesezeichen oder einer Notiz angeordnet. Da es sich um Hilfsangebote handelt, funktioniert das beschriebene Navigationssystem auch ohne diese Funktionen.
Durch einen weiteren Schalter Externe Systeme hat der Benutzer die Möglichkeit, mittels eines eindeutigen Indikators Informationen über das aktuelle Info-Objekt aus anderen Informationssystemen angezeigt zu bekommen.

## Patentansprüche

1. Verfahren zur menugeführten Navigation in einem komplexen auf einem Datenträger abgelegten Datenbestand zum Zwecke der selektiven Visualisierung, bei dem ausgehend von einem visualisierten Grundmenü über das Anwählen von aktivierbaren Menueinträgen ein Zugriff auf einen separat abgelegten das Objekt charakterisierenden strukturierten Datenbestand sowie in Formularen abgelegten Grafiken erfolgt,
**dadurch gekennzeichnet,**
**daß** ein in zweidimensionaler Ebene perspektivisch dargestellter, symmetrischer dreidimensionaler Körper (12) als Navigationsmittel verwendet wird, dessen Mantelfläche segmentiert ist, und zwar in eine erste Menustruktur (Sicht) (17.1 - 17.5) und eine zweite Menustruktur (Dokumentenklasse) (18), wobei die zweite Menustruktur (Dokumentenklasse) (18) ausschließlich Menueinträge aufweist, die kontextsensitiv der ersten Menustruktur (Sicht) (17.1 - 17.5) untergeordnet sind, und jeweils mindestens ein Teilelement beider Menustrukturen gleichzeitig im Blickfeld des Benutzers darstellbar ist, wobei die erste Menustruktur (Sicht) (17.1 - 17.5) einer die Struktur des Objektes wiederspiegelnden Hierarchieebene (25 - 29) zuordenbar ist und wobei jedes Teilelement als Schaltfläche ausgebildet ist und durch Aktivieren einer dieser sichtbaren Schaltflächen der hinter dieser Teilfläche abgespeicherte Datenbestand visualisierbar ist und wobei durch Drehen des Körpers ein Wechsel zu einer anderen Schaltfläche der zweiten Menustruktur möglich ist, bei deren Aktivierung ein Wechsel des Kontextes erfolgt.

2. System zur menugesteuerten Navigation in einem komplexen Datenbestand, bestehend aus einer Datenbank, einer Informationsseiten-Datei und einem visualisierten Informationsträger, insbesondere Bildschirm, auf dem ein in zweidimensionaler Ebene perspektivisch dargestellter, symmetrisch dreidimensionaler sowie schwenk- bzw. drehbarer Körper abbildbar ist, der mindestens drei im Blickfeld des Benutzers liegende Flächen aufweist zur Durchführung des Verfahrens nach Anspruch 1,
**dadurch gekennzeichnet,**
**daß** der Körper ein gerader Zylinder (12) ist, der in eine ersten Menustruktur enthaltende Segmente (Sicht) (17.1-17.5) und eine zweite Menustruktur enthaltende Schubladen (Dokumentenklassen) (18) gegliedert ist, wobei die sichtbaren Flächen der Segmente und der Schubladen jeweils Aktionsschaltflächen sind.

3. Mittel nach den Ansprüchen 1 bis 2,
**dadurch gekennzeichnet,**
**daß** der Körper in mindestens fünf Segmente gegliedert ist.

4. Mittel nach einem der Ansprüche 1 bis 3,
**dadurch gekennzeichnet,**
**daß** jedes Segment (Sicht) (17.1 - 17.5) eine Untergliederung in fünf Schubladen (Dokumentenklasse) (18) aufweist.

5. Mittel nach einem der Ansprüche 1 bis 4,
**dadurch gekennzeichnet,**
**daß** neben Teilbereichen der Mantelfläche (14 - 16) des Körpers (12) die Deckfläche (13) sichtbar ist und der Mittenbereich der Deckfläche (13) mit der Benennung des interessierenden Informationsobjektes (19) versehen ist.

6. Mittel nach einem der Ansprüche 1 bis 5,
**dadurch gekennzeichnet,**
**daß** der in den Sichtbereich des Benutzers fallende Mantelbereich (14) des Körpers (12) gespreizt ist.

7. Mittel nach einem der Ansprüche 1 bis 6,
**dadurch gekennzeichnet,**
**daß** die Aktionsschaltflächen mit leicht verständlichen "sprechenden" Symbolen **gekennzeichnet** sind.

8. Mittel nach einem der Ansprüche 1 bis 7,
**dadurch gekennzeichnet,**
**daß** um den Körper herum weitere Aktionsschaltflächen (20 - 24) angeordnet sind.

## Claims

1. Process for menu-based navigation in a complex data stock stored on a data carrier for the purpose of selective visualisation, by which access is gained - by selecting actionable menu items from a visualised basic menu - to a separately-stored data stock which is structured so as to characterise the object, and to graphics held as forms,
**characterised by** the fact that
a symmetrical, three-dimensional body (12) with segmented sides - depicted in a two-dimensional perspective view - is used as the means of navigation in a first menu structure (View) (17.1 - 17.5) and a second menu structure (Document class) (18), whereby the second menu structure (Document class) (18) includes only menu items which are subordinate in a context-sensitive manner to the first menu structure (View) (17.1 - 17.5), and at least one part-element of each of the two menu structures can be simultaneously made visible to the user; whereby the first menu structure (View) (17.1 - 17.5) can be assigned to one of the levels (25 - 29) of the hierarchy which reflects the structure of the object; and whereby each part-element is in the form of a command button, and by activating one of these visible buttons, the data stock stored behind these part-buttons can be visualised; and whereby it is possible, by rotating the body, to change to a different command button of the second menu structure, the activation of which brings about a change in the context.

2. System for menu-based navigation in a complex data stock, consisting of a database, a file of information pages, and a visualised information carrier, particularly a screen, on which may be displayed - in two-dimensional perspective view - a symmetrically three-dimensional and pivotable and/or rotatable body, which displays at least three surfaces in the user's field of view, for the purpose of implementing the process of Claim 1,
**characterised by** the fact that
the body is in the form of a straight cylinder (12), which is divided into segments containing a first menu structure (View) (17.1 - 17.5), and drawers containing a second menu structure (Document class) (18), whereby the visible surfaces of the segments and the drawers are each in the form of action buttons.

3. Method in accordance with Claims 1 to 2,
**characterised by** the fact that
the body is divided into at least five segments.

4. Method as in one of Claims 1 to 3,
**characterised by** the fact that
each segment (View) (17.1 - 17.5) is subdivided into five drawers (Document class) (18).

5. Method as in one of Claims 1 to 4,
**characterised by** the fact that
in addition to the parts of the surface (14- 16) of the body (12), the top (13) is also visible, and that the central area of the top part (13) indicates the designation of the information object (19) which is being dealt with.

6. Method as in one of Claims 1 to 5,
**characterised by** the fact that
the area of the surface (14) of the body (12) which comes into the visual range of the user is spread out.

7. Method as in one of Claims 1 to 6,
**characterised by** the fact that
the action buttons are marked with easily-understood, meaningful symbols.

8. Method as in one of Claims 1 to 7,
**characterised by** the fact that
other action buttons (20 - 24) are arranged around the body.

## Revendications

1. Procédé pour la navigation guidée par menu dans un ensemble complexe de données mémorisé sur un support de données dans le but d'une visualisation sélective, dans lequel, à partir d'un menu de base visualisé, par l'intermédiaire du choix d'enregistrements de menu pouvant être activés, il est effectué un accès à un ensemble de données structuré, caractérisant l'objet, mémorisé de façon séparée, ainsi qu'à des graphiques mémorisés dans des formulaires,
**caractérisé en ce qu'**un corps tridimensionnel symétrique (12), représenté en perspective dans un plan à deux dimensions, est utilisé comme moyen de navigation, dont la surface d'enveloppe est segmentée et, en vérité, en une première structure de menu (vue) (17.1 - 17.5,) et une seconde structure de menu (classe de document) (18), la seconde structure de menu (classe de document) (18) présentant exclusivement des enregistrements de menu qui sont subordonnés, de façon sensible au contexte, à la première structure de menu (vue) (17.1 - 17.5), et, à chaque fois, au moins un élément partiel des deux structures de menu peut être représenté simultanément dans le champ de vision de l'utilisateur, la première structure de menu (vue) (17.1 - 17.5) pouvant être associée à un plan hiérarchique (25 - 29) reflétant la structure de l'objet, et chaque élément partiel étant réalisé comme surface de commutation et l'ensemble de données mémorisé derrière cette surface partielle pouvant être visualisé par activation d'une de ces surfaces de commutation visibles, et, par rotation du corps, un changement en une autre surface de commutation de la seconde structure de menu étant possible, lors de l'activation de laquelle il est effectué un changement du contexte.

2. Système pour la navigation guidée par menu dans un ensemble complexe de données, constitué d'une banque de données, d'un fichier de pages d'informations, et d'un support d'informations visualisé, en particulier un écran, sur lequel peut être affiché un corps symétrique tridimensionnel, ainsi que pouvant pivoter ou tourner, représenté en perspective dans un plan à deux dimensions, qui présente au moins trois surfaces se trouvant dans le champ de vision de l'utilisateur, pour la mise en oeuvre du procédé selon la revendication 1,
**caractérisé en ce que** le corps est un cylindre droit (12), qui est subdivisé en segments contenant une première structure de menu (vue) (17.1 - 17.5) et en tiroirs contenant une seconde structure de menu (classe de document) (18), les surfaces visibles des segments et des tiroirs étant, à chaque fois, des surfaces de commutation d'action.

3. Moyen selon les revendications 1 à 2,
**caractérisé en ce que** le corps est subdivisé en au moins cinq segments.

4. Moyen selon une des revendications 1 à 3,
**caractérisé en ce que** chaque segment (vue) (17.1 - 17.5) présente une subdivision en cinq tiroirs (classe de document) (18).

5. Moyen selon une des revendications 1 à 4,
**caractérisé en ce que**, à côté de zones partielles de la surface d'enveloppe (14 - 16) du corps (12), la surface de recouvrement (13) est visible, et la zone centrale de la surface de recouvrement (13) est munie de la dénomination de l'objet d'information intéressant (19).

6. Moyen selon une des revendications 1 à 5,
**caractérisé en ce que** la surface d'enveloppe (14), tombant dans la zone de vision de l'utilisateur, du corps (12) est élargie.

7. Moyen selon une des revendications 1 à 6,
**caractérisé en ce que** les surfaces de commutation d'action sont **caractérisées par** des symboles "parlants" facilement compréhensibles.

8. Moyen selon une des revendications 1 à 7,
**caractérisé en ce que** d'autres surfaces de commutation d'action (20 - 24) sont agencées autour du corps.
